# EUROPÄISCHE PATENTSCHRIFT

(11) **EP 1 597 045 B1**
(45) Veröffentlichungstag und Bekanntmachung des Hinweises auf die Patenterteilung: **15.12.2010**
(21) Anmeldenummer: 04707925.6
(22) Anmeldetag: 04.02.2004
(51) Int. Cl.: B29B 9/06, B26F 3/00, B01J 2/20

(54) **VERFAHREN ZUR ZERTRENNUNG PASTÖSER FORMMASSEN**
METHOD FOR SEPARATING PASTY MATERIALS
PROCEDE POUR FRACTIONNER UNE MATIERE A MOULER PATEUSE

(30) Priorität: 05.02.2003 DE 10304611
(43) Veröffentlichungstag der Anmeldung: 23.11.2005
(73) Patentinhaber: BASF SE, 67056 Ludwigshafen (DE)
(72) Erfinder: MÜLLER, Ulrich, 67435 Neustadt (DE); MÜLLER, Jan, 67435 Neustadt (DE)
(86) Internationale Anmeldenummer: PCT/EP2004/001004
(87) Internationale Veröffentlichungsnummer: WO 2004/069507

(56) Entgegenhaltungen:
- EP-A- 0 830 927
- US-A- 3 846 529
- US-A- 4 776 998
- US-A- 5 063 002

## Beschreibung

Die vorliegende Erfindung betrifft ein Verfahren zum Zertrennen von pastösen Formmassen nach dem Anspruch 1. Das Zertrennen dieser Massen erfolgt dabei durch Inkontaktbringen der Formmassen mit einem Strom, der im wesentlichen aus Luft besteht.

In technischen Verfahren fallen häufig Prozeßschritte an, in denen pastöse Massen zertrennt werden müssen. Solche Verfahren kommen beispielsweise in der Massenproduktion von Kunststofferzeugnissen, Pharmaprodukten, Reinigungs- und Körperpflegemitteln, Lebensmitteln, Tierfutter oder Katalysatoren zur Anwendung, bei denen pastöse Massen verformt werden.

Als Beispiel seien unter anderem Extrusionsverfahren genannt, in denen pastöse Massen in einer Extrusionsvorrichtung verarbeitet und in eine prozeßtechnisch oder anwendungsorientiert erforderliche Form gebracht werden. Dabei wird am Ausgang der Extrusionsvorrichtung gewöhnlich eine Matrize angebracht, deren Geometrie den Durchmesser und die Querschnittsform des die Extrusionsvorrichtung verlassenden Formlings bestimmt. Auf diese Art und Weise werden beispielsweise Stränge oder Hohlstränge verschiedenster Durchmesser, Querschnittformen und Geometrien erhalten.

Zum Zertrennen der pastösen Massen und damit zur Einstellung der Länge der Formlinge sind die Extrusionsvorrichtungen mit Abschlagsvorrichtungen ausgestattet, die einen aus der Extrusionsvorrichtung austretenden Endlosformling gezielt ablängen. In der Regel wird dieses Ablängen mittels Schlag- oder Schneidwerkzeugen bewerkstelligt, wobei diese Werkzeuge in der Regel aus Metall, Keramik, Kunststoff oder entsprechenden Verbundmaterialien gefertigt sind.

Ein erheblicher Nachteil dieser herkömmlichen Ablängverfahren ist darin zu sehen, daß die Werkzeuge durch das Zertrennen der pastösen Formmassen einem natürlichen Verschleiß unterliegen. Reparaturen und Auswechseln der Werkzeuge sowie häufige Abstellzeiten sind die Folge.

Weitere Nachteile treten insbesondere bei Formmassen hoher Viskosität oder stark inhomogener Konsistenz auf. Durch Ablagerungen von Teilen der Formmassen auf den Werkzeugen, die beim Zertrennprozeß zwangsläufig auftreten, kommt es einerseits zu Produktverlusten. Andererseits erfordern diese Ablagerungen auch die unter Umständen häufige Reinigung der Werkzeuge.

Bei relativ weichen Formmassen tritt der Nachteil auf, daß nach dem Zertrennen mit herkömmlichen Werkzeugen ein abgetrennter Teil der Formmasse häufig am Rest der Formmasse kleben bleibt, was sich auf die Produktqualität äußerst negativ auswirkt bzw. die Produkte sogar unbrauchbar macht.

Als weiterer Nachteil, der insbesondere bei Formmassen auftritt, die empfindliche Bestandteile enthalten, ist die Gefahr der Kontamination der Formmassen durch Abträge und Austräge der sich allmählich verschleißenden Werkzeuge zu nennen. In einem solchen Fall muß sich eine Untersuchung der Produkte anschließen, um der Gefahr, kontaminierte Formmassen weiterzuverarbeiten oder auf den Markt zu bringen, zu begegnen. Als Alternative ist nur die Wahl völlig unbedenklicher Werkzeuge gegeben, was erhebliche Forschungstätigkeiten und Investitonen nach sich ziehen kann.

Die US 3,846,529 beschreibt ein Verfahren gemäß dem Oberbegriff des Anspruchs 1, in dem ein konstanter Hochdruckgasstrom durch einen geeigneten Deflektor in einer Weise abgelenkt wird, dass die Ausrichtung dieses Stromes senkrecht zur Stirnseite des Extruders erfolgt. Dadurch trifft der Strom seitlich auf die Extrudate, so dass eine entsprechende Kraft auf die Seitenfläche der Extrudate ausgeübt wird. Bei Erreichen einer gewissen Länge der Extrudate führt diese (Scher-)Kraft zum Abbrechen der Extrudate.

In der US 5,063,002 wird ein Verfahren beschrieben, gemäß dem elastomere Partikel aus extrudierten Materialien wie Butyl- und Ethylen-Propylen-Gummi hergestellt werden, wobei die Abtrennung der Extrudate mittels eines konstanten Hochdruckgasstromes erfolgt, welcher auf die Seitenfläche der Extrudate gelenkt wird. Bei diesem Verfahren hängt die Länge der abgeschnittenen Teilchen von der Materialeigenschaft der Extrudate ab.

Im Unterschied zu den in der US 3,846,529 und US 5,063,002 beschriebenen Verfahren erfolgt das Abtrennen der Extrudate gemäß der US 4,776,998 und der EP 0 830 927 A2 nicht mit einem Hochdruckgasstrom, sondern mittels Wasserstrahltechnik. Dabei handelt es sich um jeweils einen Wasserstrahl, der weder in seiner Geschwindigkeit noch in seinem Druck periodisch variiert wird. Während gemäß EP 0 830 927 A2 die Extrudate von einem Wasserstrahl, der parallel zur Stirnseite des Extruders ausgerichtet ist, in vertikaler Richtung abgetrennt werden, erfolgt gemäß US 4,776,998 das Abtrennen von Formteilen von einem vertikal ausgerichteten Extrudatstrang durch einen horizontal ausgerichteten Wasserstrahl.

Eine der vorliegenden Erfindung zugrunde liegende Aufgabe war es, diesen in herkömmlichen Verfahren auftretenden Nachteilen abzuhelfen.

Daher betrifft die vorliegende Erfindung ein Verfahren zum Zertrennen eines Strangs einer pastösen Formmasse mit einer Viskosität im Bereich von 300 bis 5000 N/cm², dadurch gekennzeichnet, dass zum Zertrennen die pastöse Formmasse mit mindestens einem im wesentlichen aus Luft bestehenden Strom in Kontakt gebracht wird, wobei der Strang periodisch zertrennt wird und die Länge der Stücke, die vom Strang abgetrennt werden, durch die Pulsfrequenz, mit der der Strom ausgebracht wird, geregelt wird.

Der Begriff "Zertrennen", wie er im Rahmen der vorliegenden Erfindung verwendet wird, umfaßt Verfahrensführungen, bei denen durch das Inkontaktbringen der pastösen Formmasse mit dem das mindestens eine fluide Medium enthaltenden Strom von der Formmasse ein Teil vollständig abgetrennt wird. Als Beispiel für dieses vollständige Abtrennen sei beispielsweise das Ablängen eines Stranges einer Formmasse genannt.

Unter dem Begriff "Formmasse", wie er im Rahmen der vorliegenden Erfindung verwendet wird, fallen Massen, die mindestens einem formgebenden Schritt unterworfen werden. Dabei sind Verfahrensführungen umfaßt, bei denen der formgebende Schritt darin besteht, daß die Formmasse erfindungsgemäß zertrennt wird. Vor dem erfindungsgemäßen Zertrennen oder im Anschluß an das erfindungsgemäße Zertrennen oder sowohl vor als auch nach dem erfindungsgemäßen Zertrennen kann die pastöse Formmasse mindestens einem weiteren formgebenden Schritt unterworfen werden.

So können als weitere formgebende Schritte beispielsweise ein oder mehrere weitere Zertrennschritte vorgesehen werden, die entweder erfindungsgemäß mittels eines Stroms, im wesentlichen bestehend aus Luft, oder nach herkömmlichen Verfahren des Standes der Technik wie beispielsweise mittels eines mechanischen Zertrennens durchgeführt werden.

Als weitere formgebende Schritte sind auch von Zertrennverfahren verschiedene formgebende Verfahren möglich. Beispielsweise kann ein Strang einer Formmasse formgebend derart verändert werden, daß beispielsweise seine Länge und/oder sein Durchmesser und/oder sein Querschnitt geändert wird. Ebenso kann beispielsweise ein aus einem erfindungsgemäßen Zertrennvorgang resultierendes, abgetrenntes Stück einer Formmasse wie beispielsweise eines Formmassenstrangs in mindestens einer seiner geometrischen Eigenschaften verändert werden, wie beispielsweise durch Kneten, Walzen, Verdichten, Ziehen oder anderen Prozessen. Auch durch beispielsweise einen oder mehrere Trocknungs- und/oder Temperungsprozesse oder durch einen oder mehrere chemische Prozesse kann formgebend auf die Formmasse oder das aus dem erfindungsgemäßen Zertrennvorgang resultierende Stück einer Formmasse Einfluß genommen werden.

Als mögliche Ausfuhrungsform des erfindungsgemäßen Verfahrens ist auch eine Verfahrensführung zu nennen, bei der im Zertrennschritt das Inkontaktbringen einer pastösen Formmasse mit einem Strom, im wesentlichen bestehend aus Luft, mit einem oder mehreren herkömmlichen Zertrennverfahren gemäß dem Stand der Technik in geeigneter Weise kombiniert wird. So ist es unter anderem denkbar, daß der pastöse Formmassenstrang unter Beibehaltung seiner Einstückigkeit mittels eines oder mehrerer herkömmlicher Werkzeuge mit mindestens einem Schnitt versehen wird und mindestens einer dieser Schnitte mittels des erfindungsgemäßen Verfahrens vollständig durchtrennt wird.

Was das Inkontaktbringen des Stroms, im wesentlichen bestehend aus Luft, mit der pastösen Formmasse betrifft, so sind sämtliche geeigneten Verfahrensführungen möglich.

In einer bevorzugten Ausführungsform wird der Strom unter einem bestimmten Druck, bei einem bestimmten Volumenstrom, einer bestimmten Temperatur des Stroms, einer bestimmten Richtung und mit bestimmter Querschnittsfläche und -geometrie mit der Formmasse unter bestimmten Umgebungsbedingungen kontinuierlich in Kontakt gebracht werden. Unter dem Begriff "kontinuierlich" werden in diesem Zusammenhang alle Verfahrensführungen verstanden, bei denen im Laufe eines einzigen Zertrennvorgangs die Formmasse permanent mit dem Strom, enthaltend mindestens ein fluides Medium, in Kontakt steht.

Unter diese Ausführungsform des kontinuierlichen Inkontaktbringens fallen unter anderem solche Verfahrensführungen, bei denen der Strom mit konstantem Druck, konstanter Temperatur, konstantem Volumen pro Zeiteinheit, konstanter Richtung und konstanter Querschnittsfläche und -geometrie auf den Formkörper aufgegeben wird. Unter diese Ausführungsform fallen unter anderem wiederum solche Verfahrensführungen, bei denen die genannten Parameter des Strom, im wesentlichen bestehend aus Luft, an der Auslaßvorrichtung, über die der Strom auf die Formmasse aufgegeben wird, konstant sind als auch Verfahrensführungen, bei denen diese Parameter an der jeweiligen Oberfläche der Formmasse konstant sind. Hinsichtlich der letzten beiden Ausführungsformen ist es demgemäß denkbar, daß die Auslaßöffnung, über die der Strom auf die Formmasse aufgegeben wird, relativ zur Formmasse in konstanter Position bleibt. Hierbei sind die Parameter des Stroms an der Oberfläche der Formmasse und der Auslaßöffnung konstant. Ebenso kann sich die Position der Auslaßöffnung des Stroms im Laufe des Zertrennprozesses relativ zur Formmasse ändern, wodurch bei konstanten Stromparametern an der Auslaßöffnung die Stromparameter an der Oberfläche der Formmasse geändert werden können sowie bei variablen Stromparametern an der Auslaßöffnung die Stromparameter an der Oberfläche der Formmasse konstant gehalten werden können.

Ebenso kann der Strom diskontinuierlich auf die Formmasse aufgegeben werden. Unter diese Ausführungsform fallen unter anderem solche Verfahrensführungen, bei denen im Laufe eines einzigen Zertrennvorgangs die pastöse Formmasse zwar permanent mit dem Strom, im wesentlichen bestehend aus Luft, in Kontakt steht, von den oben beschriebenen veränderlichen Parametern dieses Stroms jedoch mindestens einer über der Zeit verändert wird. So ist es beispielsweise denkbar, daß sich im Laufe dieses einen Zertrennvorgangs der Druck, mit dem der Strom ausgebracht wird oder der Druck, mit dem der Strom auf die pastöse Formmasse trifft, verändert wird. Gleiches gilt für die oben beschriebenen Parameter wie Volumenstrom, Temperatur des Stroms, Querschnittsfläche - und geometrie und Richtung.

Vorrichtungen, umfassend die oben genannte Auslaßöffnung, sind beispielsweise Düsen. Im Rahmen des erfindungsgemäßen Verfahrens unter anderem bevorzugte Düsen sind etwa Flachstrahldüsen, die sich beispielsweise durch gleichmäßige Flüssigkeits- und Druckverteilung des ausgelassenen Stroms auszeichnen können, wobei auch solche Düsen eingesetzt werden können, die eine bestimmte Verteilung der Luft im ausgelassenen Strom aufweisen. Beispiele für solche Verteilungen sind unter anderem parabelförmige oder trapezförmig Verteilungen. Ganz allgemein können beispielsweise Niederdruck- oder Hochdruckdüsen als Luftdüsen eingesetzt werden. Je nach den Verfahrensbedingungen können Düsen eingesetzt werden, die aus Materialien wie Metallen wie Messing, säurebeständigem Stahl, hitzebeständigem Stahl, Titan, Kunststoffen wie Polyvinylchlorid (PVC), Polypropylen (PP) oder Hastelloy oder zwei oder mehr dieser Materialien bestehen. Düsen der oben beschriebenen Art sind kommerziell beispielsweise von den Firmen Lechler oder Schlick erhältlich.

Unter dem Begriff "ein einziger Zertrennvorgang" werden im Rahmen der vorliegenden Erfindung Verfahrensführungen verstanden, bei denen ein Teil einer pastösen Formmasse vollständig vom Rest der Formmasse abgetrennt wird.

In der vorliegenden Erfindung wird ein Strang einer pastösen Formmasse periodisch abgelängt. Beispielsweise kann der Strang der Formmasse mit konstanter Vorschubgeschwindigkeit an einer oder mehreren ortsfest ausgeführten Auslaßvorrichtungen vorbeibewegt werden, durch die ein oder mehrere Ströme, im wesentlichen bestehend aus Luft, ausgebracht und mit dem Strang in Kontakt gebracht werden. Durch die Frequenz, mit der der Strom ausgebracht wird, kann die Länge der Stücke geregelt werden, die vom Strang abgetrennt werden. So ist es unter anderem denkbar, diese Pulsfrequenz bei konstanter Vorschubgeschwindigkeit des Strangs ebenfalls konstant zu halten, wodurch beispielsweise Strangstücke gleicher Länge erhalten werden. Ebenso ist es möglich, bei konstanter Vorschubgeschwindigkeit die Pulsfrequenz über der Zeit zu ändern, wodurch Strangstücke definierter unterschiedlicher Länge erhalten werden. Ebenso ist es möglich, die Vorschubgeschwindigkeit kontinuierlich oder diskontinuierlich über der Zeit zu ändern und die Pulsfrequenz konstant zu halten oder kontinuierlich oder diskontinuierlich über der Zeit zu ändern. Ebenso ist es denkbar, die mindestens eine Auslaßvorrichtung für den Strom, im wesentlichen bestehend aus Luft, nicht-ortsfest auszugestalten. Die mindestens eine Auslaßvorrichtung kann hierbei beispielsweise an mindestens einem beweglich angeordneten Arm angebracht sein, der sich parallel oder in davon abweichenden Richtungen zum Formmassenstrang bewegt. Für jeden bei einem Puls mit der Formmasse in Kontakt gebrachten Strom sind die oben beschriebenen kontinuierlichen und diskontinuierlichen Verfahrensführungen hinsichtlich des Aufbringens des Stroms auf die Fommasse denkbar.

Selbstverständlich sind auch Verfahrensführungen denkbar, bei denen mehrere Stränge gleichzeitig abgelängt werden. Beispielsweise besonders bevorzugt entsteht solch eine Mehrzahl an Strängen in einer Extrusionsvorrichtung.

In einer besonders bevorzugten Ausführungsform der vorliegenden Erfindung, in der beispielsweise ein Endlosstrang einer pastösen Formmasse durch den Strom, im wesentlichen bestehend aus Luft, vollständig abgetrennt wird, wodurch der Endlosstrang abgelängt wird, zeigt sich ein erheblicher Vorteil, den das erfindungsgemäße Verfahren gegenüber den herkömmlichen mechanischen Zerbrennwerkzeugen wie beispielsweise Ablängdrähten bietet Durch die Nutzung der Luft ist die Kontrolle der Pulsfrequenz, mit der der Strom mit der Formmasse in Kontakt gebracht wird, deutlich reproduzierbarer zu bewerkstelligen als dies bislang der Fall war. Damit ist auch die Länge der vom Formmassenstrang abgetrennten Strangstücke reproduzierbarer einstellbar, wovon besonders Anwendungsbereiche profitieren, in denen eine möglichst homogene Pluralität an Strangstücken erforderlich ist. Wird beispielsweise eine pastöse Formmasse zertrennt, um Schüttgut herzustellen, das mit einer hohen Schüttdichte verwendet werden soll, so bietet sich das erfindungsgemäße Verfahren besonders vorteilhaft an, da es im Vergleich zu herkömmlichen Verfahren des Standes der Technik nicht spezifikationsgerechten Bruch oder Feinanteil oder sowohl Bruch als auch Feinanteil durch das überlegene Zertrennverfahren vermindert.

In besonders bevorzugten Ausführungsformen liegt die Schüttdichte des erfindungsgemäß herstellbaren Schüttguts im Bereich von 0,1 bis 10 g/cm³, weiter besonders bevorzugt im Bereich 0,2 bis 2 g/cm³, weiter bevorzugt im Bereich 0,3 bis 1 g/cm³ und insbesondere bevorzugt im Bereich 0,4 bis 1 g/cm³.

Prinzipiell können im Rahmen des erfindungsgemäßen Verfahrens sämtliche denkbaren pastösen Formmassen zertrennt werden, deren Viskosität bei entsprechender Wahl der Eigenschaften des Stroms, im wesentlichen bestehend aus Luft, sowie anderer Verfahrensparameter das Zertrennen durch den Strom erlaubt. Als solche Eigenschaften des Stroms seien beispielsweise genannt:
- Druck, mit der der Strom mit der Formmasse in Kontakt tritt;
- Temperatur des Stroms;
- Volumen des Stroms, das pro Zeiteinheit und Querschnittseinheit auf die Formmasse aufgebracht wird.
- Querschnitt der Kontaktfläche zwischen Strom und Formmasse;
- Geometrie der Kontaktfläche zwischen Strom und Formmasse;
- Richtung, mit der der Strom auf die Formmasse trifft;
- Frequenz, mit der der Strom auf die Formmasse aufgebracht wird.

Im allgemeinen unterliegen die pastösen Formmassen, die im erfindungsgemäßen Verfahren bearbeitbar sind, keinen weiteren Beschränkungen. Die Viskosität der Formmassen liegt im allgemeinen im Bereich von 300 bis 5000 N/cm², bevorzugt im Bereich von 500 bis 4000 N/cm² und besonders bevorzugt im Bereich von 1000 bis 3000 N/cm². Derartige pastöse Formmassen fallen beispielsweise bei der Herstellung oder Massenproduktion von Kunststofferzeugnissen, pharmazeutischen Produkten, Reinigungs- und Körperpflegemitteln, Lebensmittelprodukten, Tierfuttermitteln oder Katalysatoren an.

Im Rahmen der vorliegenden Anmeldung angegebene Viskositätsdaten verstehen sich als mit einer Zwick Materialprüfmaschine vom Typ Z010/TN2S, ausgestattet mit der Standardsoftware "testXpert", ermittelte Werte. Der Meßkopf (10 kN) stammt von der Firma GTM, Gassmann & Theiss, Meßgerätetechnik mit einem Prüfzertifikat der Firma Zwick. Die Meßapparatur besitzt als Unterteil einen Meßzylinder für maximal 40 cm³. Füllmasse, als Oberteil eine Meßdose (10 kN) mit Kugelaufsatz.

In einer ganz besonders bevorzugten Ausführungsform wird das erfindungsgemäße Verfahren für Formmassen eingesetzt, deren Viskosität im Bereich von 1000 bis 3000 N/cm² liegt. Pastöse Formmassen, die derartige Viskositäten aufweisen, werden beispielsweise bei der Herstellung von Katalysatorformkörpern eingesetzt.

Unter dem Begriff "Katalysatorformkörper" werden im Rahmen der vorliegenden Erfindung Formkörper verstanden, die als fertiger Katalysator oder als Katalysatorvorstufe dienen. Weiter können Katalysatorformkörper mindestens einen weiteren, nicht katalytisch wirksamen Bestandteil aufweisen, der im Falle einer Katalysatorvorstufe beispielsweise in mindestens einem weiteren Behandlungsschritt wie beispielsweise in einer thermischen Behandlung oder einer chemischen Umsetzung aus dem Formkörper entfernt werden kann.

Beispiele für solche Katalysatoren sind unter anderem Oxidations-, Hydrierungs-, Dehydrierungs-, Epoxidations-, Aminierungs-, Alkylierungs-, Reinigungs- oder Reformingkatalysatoren. Ebenso sind Katalysatoren zur Entfernung von Stickoxiden NOₓ oder zur Zersetzung von N₂O zu nennen.

In einer unter anderem bevorzugten Ausführungsform des erfindungsgemäßen Verfahrens werden Epoxidationskatalysatorformkörper hergestellt, wobei als Epoxidationskatalysatoren wiederum Zeolith-Katalysatoren bevorzugt sind. Bezüglich der im Rahmen der vorliegenden Erfindung herstellbaren Zeolith-Katalysatorformkörper existieren keine besonderen Beschränkungen.

Zeolithe sind bekanntermaßen kristalline Alumosilikate mit geordneten Kanal- und Käfigstruleturen, die Mikroporen aufweisen, die vorzugsweise kleiner als ungefähr 0,9 nm sind Das Netzwerk solcher Zeolithe ist aufgebaut aus SiO₄- und AlO₄-Tetraedern, die über gemeinsame Sauerstoffbrücken verbunden sind. Eine Übersicht der bekannten Strukturen findet sich beispielsweise bei W. M. Meier, D. H. Olson und Ch. Baerlocher, "Atlas of Zeolite Structure Types", Elsevier, 4. Auflage, London, 1996. Es sind nun auch Zeolithe bekannt, die kein Aluminium enthalten und bei denen im Silikatgitter an Stelle des Si(IV) teilweise Titan als Ti(IV) steht. Diese Titanzeolithe, insbesondere solche mit einer Kristallstruktur von MFI-Typ, sowie Möglichkeiten zu Ihrer Herstellung sind beschrieben, beispielsweise in der EP-A 0 311 983 oder EP-A 405 978. Außer Silicium und Titan können solche Materialien auch zusätzliche Elemente wie z. B. Aluminium, Zirkonium, Zinn, Eisen, Kobalt, Nickel, Gallium, Bor oder geringe Menge an Fluor enthalten. In den mit dem erfindungsgemäßen Verfahren vorzugsweise regenerierten Zeolith-Katalysatoren kann das Titan des Zeoliths teilweise oder vollständig durch Vanadium, Zirkonium, Chrom oder Niob oder ein Gemisch aus zwei oder mehr davon ersetzt sein. Das molare Verhältnis von Titan und/oder Vanadium, Zirkonium, Chrom oder Niob zur Summe aus Silicium und Titan und/oder Vanadium und/oder Zirkonium, und/oder Chrom und/oder Niob liegt in der Regel im Bereich von 0,01 : 1 bis 0,1 : 1.

Titanzeolithe, insbesondere solche mit einer Kristallstruktur vom MFI-Typ, sowie Möglichkeiten zu ihrer Herstellung sind beispielsweise in der WO 98/55228, WO98/55229, WO 98/55430, EP-A 0 311 983 oder der EP-A 0 405 978 beschrieben, deren diesbezüglicher Umfang vollumfänglich in den Kontext der vorliegenden Anmeldung einbezogen wird. Titanzeolithe mit MFI-Struktur sind dafür bekannt, daß sie über ein bestimmtes Muster bei der Bestimmung ihrer Röntgenbeugungsaufnahmen sowie zusätzlich über eine Gerüstschwingungsbande im Infrarotbereich (IR) bei etwa 960 cm⁻¹ identifiziert werden können und sich damit von Alkalimetalltitanaten oder kristallinen und amorphen TiO₂-Phasen unterscheiden.

Dabei sind im einzelnen Titan-, Germanium-, Tellur-, Vanadium-, Chrom-, Niob-, Zirkoniumhaltige Zeolithe mit Pentasil-Zeolith-Struktur, insbesondere die Typen mit röntgenografischer Zuordnung zur ABW-, ACO-, AEI-, AEL-, AEN-, AET-, AFG-, AFI-, AFN-, AFO-, AFR-, AFS-, AFT-, AFX-, AFY-, AHT-, ANA-, APC-, APD-, AST-, ATN-, ATO-, ATS-, ATT-, ATV-, AWO-, AWW-, BEA-, BIK-, BOG-, BPH-, BRE-, CAN-, CAS-, CFI-, CGF-, CGS-, CHA-, CHI-, CLO-, CON-, CZP-, DAC-, DDR-, DFO-, DFT-, DOH-, DON-, EAB-, EDI-, EMT-, EPI-, ERI-, ESV-, EUO-, FAU-, FER-, GIS-, GME-, GOO-, HEU-, IFR-, ISV-, ITE-, JBW-, KFI-, LAU-, LEV-, LIO-, LOS-, LOV-, LTA-, LTL-, LTN-, MAZ-, MEI-, MEL-, MEP-, MER-, MFI-, MFS-, MON-, MOR-, MSO-, MTF-, MTN-, MTT-, MTW-, MWW-, NAT-, NES-, NON-, OFF-, OSI-, PAR-, PAU-, PHI-, RHO-, RON-, RSN-, RTE-, RTH-, RUT-, SAO-, SAT-, SBE-, SBS-, SBT-, SFF-, SGT-, SOD-, STF-, STI-, STT-, TER-, THO-, TON-, TSC-, VET-, VFI-, VNI-, VSV-, WIE-, WEN-, YUG-, ZON-Struktur sowie zu Mischstrukturen aus zwei oder mehr der vorgenannten Strukturen. Denkbar sind für den Einsatz im erfindungsgemäßen Verfahren weiterhin titanhaltige Zeolithe mit der Struktur des ITQ-4, SSZ-24, TTM-1, UTD-1, CIT-1 oder CIT-5. Als weitere titanhaltige Zeolithe sind solche mit der Struktur des ZSM-48 oder ZSM-12 zu nennen.

Bevorzugt werden im Rahmen des erfindungsgemäßen Verfahrens Formkörper von Ti-Zeolithkatalysatoren mit MFI-, MEL- oder MFI/MEL-Mischstruktur eingesetzt. Als weiterhin bevorzugt sind im einzelnen die Ti-enthaltenden Zeolith-Katalysatoren, die im allgemeinen als "TS-1", "TS-2", "TS-3" bezeichnet werden, sowie Ti-Zeolithe mit einer zu β-Zeolith isomorphen Gerüststruktur zu nennen.

Demgemäß betrifft die vorliegende Erfindung auch ein Verfahren, wie oben beschrieben, das dadurch gekennzeichnet ist, daß die pastöse Formmasse einen Titanzeolith-Katalysator umfaßt.

Das erfindungsgemäße Verfahren ist unter anderem zur Herstellung von Katalysatorformkörpern, die ein hohes Schüttgewicht erreichen sollen, von besonderem Vorteil, da, wie oben bereits erwähnt, das Zertrennen der pastösen Formmasse mittels eines Strahls, enthaltend mindestens ein fluides Medium, im Vergleich zu herkömmlichen mechanischen Verfahren Schüttgut mit höherer Schüttdichte liefert.

Katalysatoren mit hohem Schüttgewicht sind beispielsweise Epoxidationskatalysatoren, die in einem Verfahren zur Herstellung von Alkylenoxiden wie beispielsweise Propylenoxid eingesetzt werden. Besonders bevorzugte Epoxidationskatalysatoren sind beispielsweise die oben genannten Zeolithkatalyatoren, besonders bevorzugt die Titanzeolithkatalysatoren.

Die Schüttdichte dieser beispielsweise bevorzugten Epoxidationskatalysatoren liegt beispielsweise besonders bevorzugt im Bereich von 0,4 bis 1 g/cm³.

Demgemäß beschreibt die vorliegende Erfindung auch ein Verfahren, wie oben beschrieben, zur Herstellung von Schüttgut, das dadurch gekennzeichnet ist, daß das Schüttgut, insbesondere Katalysatorformkörper, eine Schüttdichte im Bereich von 0,1 bis 10 g/cm³, weiter besonders bevorzugt im Bereich 0,2 bis 2 g/cm³ weiter bevorzugt im Bereich 0,3 bis 1 g/cm³ und insbesondere bevorzugt im Bereich 0,4 bis 1 g/cm³ aufweisen.

Ebenso beschreibt die vorliegende Erfindung auch die Verwendung einer erfindungsgemäßen Vorrichtung zur Herstellung von Katalysatorformkörpern mit einer Schüttdichte im Bereich von 0,1 bis 10 g/cm³, weiter besonders bevorzugt im Bereich 0,2 bis 2 g/cm³ weiter bevorzugt im Bereich 0,3 bis 1 g/cm³ und insbesondere bevorzugt im Bereich 0,4 bis 1 g/cm³.

Im Rahmen des erfindungsgemäßen Verfahrens können die Parameter, die den Strom definieren und obenstehend beschrieben sind, den Parametern der zu zertrennenden pastösen Formmasse wie beispielsweise
- Viskosität;
- Geometrie;
- Vorschubgeschwindigkeit (bei einer sich bewegenden Formmasse);
- Zusammensetzung
angepaßt werden. Erlaubt es die chemische Zusammensetzung der pastösen Formmasse, so kann als fluides Medium beispielsweise Stickstoff verwendet werden. Dies bietet den Vorteil, daß Stickstoff in vielen Produktionsprozessen bereits vor Ort in Gasnetzen vorliegt. Ebenso ist ein Strom denkbar, der aus Druckluft besteht, die ebenfalls meistens vor Ort in Gasnetzen vorliegt.

Werden in einer besonders bevorzugten Ausführungsform des erfindungsgemäßen Verfahrens beispielsweise Katalysatorformkörper, umfassend mindestens einen Titanzeolithen, durch Zertrennen von pastösen Formmassen hergestellt, so ist ein Strom bevorzugt, der aus Druckluft besteht.

Demgemäß betrifft die vorliegende Erfindung auch ein Verfahren, wie oben beschrieben, das dadurch gekennzeichnet ist, daß der Strom im wesentlichen aus Luft besteht.

Unter dem Begriff "Luft", wie er im Rahmen der vorliegenden Erfindung verwendet wird, wird ein Gas oder eine Gasmischung verstanden, die im wesentlichen aus Stickstoff, bevorzugt mit Stickstoffgehalten von größer oder gleich 78 Vol.-% besteht und im wesentlichen in jedem Labor und jeder im technischen oder industriellen Maßstab betriebenen Produktionsanlage fest installiert ist. Je nach Quelle, aus der die Luft stammt, kann deren Zusammensetzung im Rahmen der dem Fachmann geläufigen Grenzen schwanken.

Wie bereits oben beschrieben, kann der Druck des Strom, im wesentlichen bestehend aus Luft; vollständig den durch die pastöse Formmasse und die Art des Zertrennvorgangs, wie beispielsweise vollständiges Durchtrennen, vorgegebenen Erfordernissen angepaßt werden.

Wird als Strom ein Gas oder Gasgemisch eingesetzt, so kommen Drucke von einigen Millibar bis hin zu Hochdrücken von bis zu 2000 bar in Frage. Die Temperatur des Gasstroms kann beispielsweise Raumtemperatur haben und bis hin zu 700 °C betragen.

Wird im Rahmen der vorliegenden Erfindung beispielsweise ein Katalysatorformkörper wie beispielsweise einer der oben als bevorzugt beschriebenen Katalysatorformkörper hergestellt, so wird ein Gasstrom, der im wesentlichen aus Luft besteht, im allgemeinen mit Drücken im Bereich von 1 bis 325 bar, bevorzugt im Bereich von 4 bis 200 bar und besonders bevorzugt im Bereich von 10 bis 100 bar eingesetzt. Der Gasstrom weist dabei eine Temperatur auf, die im allgemeinen im Bereich von Raumtemperatur bis 200 °C, bevorzugt im Bereich von Raumtemperatur bis 100 °C und besonders bevorzugt im Bereich von Raumtemperatur bis 50 °C liegt.

Demgemäß betrifft die vorliegende Erfindung auch ein Verfahren, wie oben beschrieben, das dadurch gekennzeichnet ist, daß der Strom mit einem Druck im Bereich von 1 bis 325 bar und mit einer Temperatur im Bereich von Raumtemperatur bis 200 °C mit der pastösen Formmasse in Kontakt gebracht wird.

Weiter besonders bevorzugt werden die Parameter des Gasstroms derart gewählt, daß die pastöse Formmasse zwar zertrennt, jedoch nicht zertrümmert oder deformiert wird. Hier zeigt sich wiederum der Vorteil des erfindungsgemäßen Verfahrens gegenüber herkömmlichen mechanischen Zertrennvorrichttungen, denn Druck, Temperatur, Volumenstrom und sämtlichen anderen Parameter des Gasstroms sind optimal an die Konsistenz wie beispielweise Plastizität und Sprödigkeit der jeweiligen pastösen Formmasse anpaßbar.

Die vorliegende Erfindung wird anhand der folgenden Beispiele illustriert.

### Beispiele

### Beispiel 1 (erfindungsgemäß):

In einem Kneter wurden 150 g Titanzeolithpulver mit 125 g Kieselsol Ludox AS 40, 120 g wässriger Polystyroldispersion (30 Gew.-% Polystyrol), 6 g Methylcellulose, 2 g Polyethylenoxid und 48 g deionisiertem Wasser vermischt und für die Dauer von 60 Minuten verknetet. Anschließend wurde die erhaltene Paste über eine Matritze mit 1,5 mm-Bohrung bei einem Pressdruck von 80 - 100 bar ausgeformt

An der Ausgangsfläche der Matritze waren 2 Flachstrahldüsen (Fa. Schlick, Bezeichnung 19828, Mod.650, Mundstück Gr.0, Leistung 2,51/min bei 3bar, Streuwinkel 90°) angebracht, die mit 10 bar Pressluft angetrieben wurden. Der austretende Luftstrahl wurde mittels Magnetventilen pulsierend gesteuert.

Durch den Luftstrahl wurden die aus der Form austretenden Strang-Grünlinge abgeschnitten, wobei über die Kombination aus Pastenvortrieb und Pulsationsfrequenz des Luftstrahls die Stranglänge auf den engen Bereich von 4 - 8 mm eingeregelt werden konnte.

Abschließend wurden die Strang-Grünlinge bei 120°C über Nacht an Luft getrocknet und bei 500°C an Luft innerhalb von 3 Stunden kalziniert.

Die Schüttdichte des so hergestellten Katalysators betrug 440 g/Liter.

### Beispiel 2 (Vergleichsbeispiel)

In einem Kneter wurden 150 g Titanzeolithpulver mit 125 g Kieselsol Ludox AS 40 , 120 g wässriger Polystyroldispersion (30 Gew.-% Polystyrol), 6 g Methylcellulose, 2 g Polyethylenoxid und 48 g deionisiertem Wasser vermischt und für die Dauer von 60 Minuten verknetet. Anschließend wurde die erhaltene Paste über eine Matritze mit 1,5 mm-Bohrung bei einem Pressdruck von 80 - 100 bar ausgeformt.

An der Ausgangsfläche der Matritze befand sich eine Abschneidvorrichtung aus einem gespannten Metalldraht, der periodisch an der Austrittsfläche entlang schwang. Die abgeschnittenen Strang-Grünlinge hatten eine Länge von 4 - 18 mm mit breiter Längenverteilung. Die Stränge waren jeweils leicht gebogen und teilweise miteinander an der Längsseite verklebt.

Abschließend wurden die Strang-Grünlinge bei 120°C über Nacht an Luft getrocknet und bei 500°C an Luft innerhalb von 3 Stunden kalziniert.

Die Schüttdichte des so hergestellten Katalysators betrug nur 308 g/Liter.

## Patentansprüche

1. Verfahren zum Zertrennen eines Strangs einer pastösen Formmasse mit einer Viskosität im Bereich von 300 bis 5000 N/cm² gemäß der Definition von Viskositätsdaten die sich als mit einer Zwick Materialprüfmaschine vom Typ Z010/TN2S, ausgestattet mit der Standardsoftware"testXpert", ermittelte Werte verstehen, wobei der Messkopf 10 kN von der Firma GTM, Gassmann & Theiss, Messgerätetechnik mit einem Prüfzertifikat der Firma Zwick stammt und wobei die Messapparatur als Unterteil einen Messzylinder für maximal 40 cm³ Füllmasse, als Oberteil eine Messdose 10 kN mit Kugelaufsatz besitzt, **dadurch gekennzeichnet, dass** zum Zertrennen die pastöse Formmasse mit mindestens einem im wesentlichen aus Luft bestehenden Strom in Kontakt gebracht wird, wobei der Strang periodisch zertrennt wird und die Länge der Stücke, die vom Strang abgetrennt werden, durch die Pulsfrequenz, mit der der Strom ausgebracht wird, geregelt wird.

2. Verfahren nach Anspruch 1, **dadurch gekennzeichnet, dass** der Strom mit einem Druck im Bereich von 1 bis 325 bar und mit einer Temperatur im Bereich von Raumtemperatur bis 200 °C mit der pastösen Formmasse in Kontakt gebracht wird.

3. Verfahren nach Anspruch 1 oder 2, **dadurch gekennzeichnet, dass** die pastöse Formmasse einen Titanzeolith-Katalysator umfasst.

4. Verfahren nach einem der Ansprüche 1 bis 3, **dadurch gekennzeichnet, dass** ein Schüttgut mit einer Schüttdichte im Bereich von 0,1 bis 10 g/cm³ erhalten wird.

5. Verfahren zur Herstellung von Titanzeolith-Katalysatorformkörpern mit einer Schüttdichte im Bereich von 0,1 bis 10 g/cm³, wobei ein Strang einer pastösen, den Titanzeolith-Katalysator umfassenden Formmasse mit einer Viskosität im Bereich von 300 bis 5000 N/cm² nach einem Verfahren gemäß Anspruch 1 periodisch zertrennt wird und wobei der im wesentlichen aus Luft bestehende Strom mit einem Druck im Bereich von 4 bis 200 bar mit der pastösen Formmasse in Kontakt gebracht wird.

## Claims

1. A process for the division of a strand of a pasty molding material having a viscosity in the range from 300 to 5000 N/cm² in accordance with the definition of viscosity data, which are understood as meaning values determined using a Zwick material tester of the type Z010/TN2S, equipped with the standard software "testXpert", the 10 kN measuring head originating from GTM, Gassmann & Theiss, Messgerätetechnik, with a test certificate from Zwick, and the measuring apparatus having a measuring cylinder with a maximum capacity of 40 cm³ as the lower part and a 10 kN load cell with a ball attachment as the upper part, wherein, for the division, the pasty molding material is brought into contact with at least one stream consisting substantially of air, the strand being periodically divided, and the length of the sections separated from the strand being governed by the pulse frequency with which the stream is delivered.

2. The process according to claim 1, wherein the stream is brought into contact with the pasty molding material at a pressure in the range from 1 to 325 bar and at a temperature in the range from room temperature to 200°C.

3. The process according to claim 1 or 2, wherein the pasty molding material comprises a titanium zeolite catalyst.

4. The process according to any of claims 1 to 3, wherein a bulk material having a bulk density in the range from 0.1 to 10 g/cm³ is obtained.

5. A process for producing titanium zeolite catalyst moldings having a bulk density in the range from 0.1 to 10 g/cm³, where a strand of a pasty molding material comprising the titanium zeolite catalyst and having a viscosity in the range from 300 to 5000 N/cm² is periodically divided by a process according to claim 1, and where the stream, consisting substantially of air, is brought into contact with the pasty molding material at a pressure in the range from 4 to 200 bar.

## Revendications

1. Procédé de fractionnement d'un fil d'un matériau de moulage pâteux ayant une viscosité dans la plage allant de 300 à 5 000 N/cm², selon la définition des données de viscosité qui se rapportent aux valeurs déterminées en utilisant un analyseur de matériaux Zwick de type Z010/TN2S équipé du logiciel standard « testXpert », la tête de mesure 10 kN étant issue de la société GTM, Gassman & Theiss, Messgerätetechnik, avec un certificat d'analyse de la société Zwick, et l'appareil de mesure comportant en tant que partie inférieure un cylindre de mesure d'une capacité maximale de 40 cm³ et en tant que partie supérieure une cellule de mesure de 10 kN avec raccord de bille, **caractérisé en ce que** pour le fractionnement, le matériau de moulage pâteux est mis en contact avec au moins un courant essentiellement constitué d'air, le fil étant périodiquement fractionné et la longueur des morceaux séparés du fil étant régulée par la fréquence d'impulsions avec laquelle le courant est déployé.

2. Procédé selon la revendication 1, **caractérisé en ce que** le courant est mis en contact avec le matériau de moulage pâteux à une pression dans la plage allant de 1 à 325 bar et à une température dans la plage allant de la température ambiante à 200°C.

3. Procédé selon la revendication 1 ou 2, **caractérisé en ce que** le matériau de moulage pâteux comprend un catalyseur à base de zéolithe au titane.

4. Procédé selon l'une quelconque des revendications 1 à 3, **caractérisé en ce qu'**un matériau en vrac est obtenu avec une densité apparente dans la plage allant de 0,1 à 10 g/cm³.

5. Procédé de fabrication de corps moulés catalytiques à base de zéolithe au titane ayant une densité apparente dans la plage allant de 0,1 à 10 g/cm³, selon lequel un fil d'un matériau de moulage pâteux, comprenant le catalyseur à base de zéolithe au titane, qui a une viscosité dans la plage allant de 300 à 5 000 N/cm², est fractionné périodiquement par un procédé selon la revendication 1 et selon lequel le courant essentiellement constitué d'air est mis en contact avec le matériau de moulage pâteux à une pression dans la plage allant de 4 à 200 bar.
